# EUROPEAN PATENT APPLICATION

(11) **EP 4 570 931 A1**
(43) Date of publication of application: **18.06.2025**
(21) Application number: 24218940.5
(22) Date of filing: 11.12.2024
(51) Int. Cl.: C22B 3/16, C01D 15/08, C22B 3/44, C22B 7/00, C22B 21/00, C22B 26/12

(54) **PROCESS FOR RECOVERING OF METALS FROM ACCUMULATORS AND BATTERIES**

(30) Priority: 12.12.2023 IT 202300026502
(71) Applicant: Itelyum Regeneration S.p.A., 26854 Pieve Fissiraga (LO) (IT); Smart Waste Engineering-Società a Responsabilità Limitata, 67100 L'Aquila (IT)
(72) Inventor: VEGLIO', Francesco, 67100 L'AQUILA (IT); BIRLOAGA, Ionela, 67100 L'AQUILA (IT); RAHMATI, Soroush, 67100 L'AQUILA (IT); GALLO, Francesco, 26854 Pieve Fissiraga (Lodi) (IT); ROMANO, Pietro, 67100 L'AQUILA (IT)
(74) Representative: Vatti, Francesco Paolo

(57) **Abstract**

A process for the recovery of metals from accumulators and batteries is described, comprising a leaching step (2), an iron recovery step (11), a lithium recovery step (20) and an aluminium recovery step (39). The iron recovery (11) is carried out by adding oxalic acid.

## Description

This invention relates to a process for the recovery of materials from accumulators and batteries, often referred to hereinafter only as batteries, preferably from used batteries, and more preferably from used lithium batteries.

From the times of Alessandro Volta, cells, batteries and accumulators have notably evolved. These are basically electrochemical systems which provide for converting the internal energy of a chemical system into electrical energy, which can be delivered as direct current at a certain voltage. Rectifiers and transformers then provide for also obtaining alternating current and for having a current with the desired voltage.

Substantially, a battery comprises a reduction system and an oxidation system, and these two reactions together bring about the passage of electrons and, consequently, the passage of electrical current. In the case of accumulators, in providing them with electrical energy, the reverse reactions take place, restoring practically identical concentrations of the initial species.

In the previous paragraph, there is mention of practically identical initial chemical species concentrations. In reality, while the reactions that take place in an accumulator are fully reversible, there is always a minimum percentage of irreversibility which leads to a reduction in the concentration of the original species for each passage of electrical power (recharge). This means that, over a more or less long time, the accumulator will no longer be capable of supplying current following recharging or will be capable of doing so only for extremely brief times, until such times have become so brief as to make the accumulator in fact unusable. At this point, the useful life of the accumulator ends and it is thrown away and replaced with a new one. The useful lifetime depends on the species used in the accumulator, the number of recharges carried out and how the accumulator is used. When the accumulator should be replaced also depends on factors such as the minimum reasonable duration (range) of the accumulator itself for the particular application it is used for.

Among accumulators, lithium accumulators are becoming increasingly popular. Lithium is an alkaline metal, with an oxidation-reduction potential of -3.045 volts, hence the metal is highly reducing and the thermodynamically favoured species is the Li⁺ ion.

The species normally used in cathodes of lithium accumulators is LiFePO₄ (lithium iron phosphate). There are four key advantages to this material. First, this material has proven to be safer than others, greatly reducing the risk of fire, even in the event of a short circuit. In addition, these types of accumulators can be recharged a much higher number of times than other known systems (10,000 recharging cycles can take place before the end of useful life). In addition, this is a material with high environmental compatibility: it is obtained as a natural mineral, can be used without adding nickel or cobalt to the accumulator and, by giving up cobalt, does not require the use of a material that involves some labour exploitation problems in how it is extracted.

These accumulators are already extremely well established and their use is expected to increase further in the future. In fact, these accumulators are used in mobile phones, electric vehicles and for storing energy produced by photovoltaic panels at peak times of production. Given the rise of these technologies and the resulting increasing use of accumulators, there are two equally serious problems: the need to find materials from which to produce the necessary accumulators and, at the end of their useful life, the disposal of used accumulators without excessively increasing environmental pollution. Lithium manganese iron phosphate batteries and accumulators are similar.

For this reason, the recovery of lithium from used batteries and accumulators is becoming very important from an economic and ecological point of view, as well as to reduce the extraction of lithium, which, since it is often carried out in salt waters, especially in Chile, Bolivia and Argentina, and involves very significant water consumption, is potentially highly risky for the environment.

Various methods have therefore been implemented to recover lithium from used batteries and accumulators, creating in fact two categories of methods: pyrometallurgical or hydrometallurgical. Hydrometallurgical methods require lower operational costs and capital and have fewer toxic gaseous emissions.

Li et al., Waste Management, 2019, 85, 437-444 illustrates a method in which citric acid is added to the grinding phase of waste batteries and accumulators, followed by a leaching phase with hydrogen peroxide leading to the complete dissolution of lithium (>99%) which can then be recovered. The remaining iron in the scrap is dissolved by a subsequent passing into water. The water containing iron is then treated with sodium hydroxide to obtain iron hydroxide which is then recovered. This method requires a grinding phase with related energy consumption. In addition, hydrogen peroxide has a relatively high price and consideration must be given as to how to use the iron hydroxide. Lastly, there is no recovery of aluminium.

Zhang et al., Waste Management, 2023, 157, 1-7, describes a process of leaching and ion exchange. Leaching is carried out by treating waste batteries with sulphuric acid, oxalic acid and citric acid. Iron and lithium dissolve (more than 85% of the complex of two ions is recovered). Next, the lithium is recovered with ion exchange resins, with a separation efficiency of more than 90%. However, the ion exchange step requires a concentration of less than 30 ppm, so highly diluted solutions with a relatively large amount of water must be used.

Hu et al., ACS Sustainable Chemistry & Engineering, 2022, 10(35), 11606-11616, refers to leaching with a mixture of sulphuric and citric acids, at 50°C for three hours. However, although lithium and iron are removed in quantities of around 95% of the total, there is no separation from aluminium, which remains together with lithium and iron for 70%. To overcome this drawback, CO₂ is added, which helps to remove aluminium. However, lithium is lost due to the formation of LiAl₂(OH)₇.H₂O.

Li et al., CSEE Journal of Power and Energy Systems, 2018, 4(2), 219-225, describe the use of oxalic acid for the recovery of lithium. Aluminium is separated from lithium iron phosphate by adding N-methylpyrrolidone at 100°C for one hour. The mixture of lithium iron phosphate and polyvinylidene fluoride is calcined at 400°C for one hour to remove the polyvinylidene fluoride. A powder is obtained which is leached with oxalic acid to dissolve the lithium, while iron oxalate precipitates during the same leaching. Disadvantages of this process are the need to use N-methylpyrrolidone and the manual separation of aluminium foils.

Problems common to the main recovery processes of these types are the separation of the aluminium foils from the lithium iron phosphate, and the removal of acetylene black and polyvinylidene fluoride from the cathodes. These problems require further treatments in order to achieve an appreciable result. Ultrasonic and thermal treatments, which have been proven, introduce substantial complications.

From US 11 509 000, a process is known which involves the following steps: 1) leaching of the cathodes with H₂SO₄, followed by filtration to obtain the leaching solution and solid residue; 2) separation of copper from the solid residue; 3) recovery of copper and aluminium (with a small portion of copper) from the aqueous phase, with the addition of phosphoric acid to precipitate iron and aluminium; 4) addition of Na₂CO₃ to the solution to obtain lithium carbonate. This process requires many steps and various reagents to add, and therefore it is rather complicated.

From CN 114 865 129, a process is known which involves the following steps: 1) heat a mixture of the material to be recycled, hydrogen peroxide and sodium chlorate with water to 40-80°C; 2) lower the pH of the resulting solution to a value ranging between 1 and 2 by adding hydrochloric acid or sulphuric acid; 3) filter to remove the residue; 4) raise the pH to a value ranging between 11 and 13 with alkalis and filter the solution obtained; 5) add sodium carbonate at a temperature between 80°C and 95°C, separating out the precipitated lithium carbonate. In addition to being complicated and requiring several steps and various reagents, the process described here does not involve the recovery of iron and aluminium, which are thus lost.

CN 116 130 821 describes equipment that dissolves the material to be recovered by pressure leaching. Leaching and filtration take place simultaneously. However, there is no information on the process parameters and reagents and their concentrations.

WO 2019/215 583 refers to a hydrometallurgical process, aimed at recovering precious metals in used permanent magnets, particularly neodymium.

CN 116 750 740 describes a method for recycling lithium iron phosphate batteries which includes steps of discharging, disassembling, crushing and sorting batteries, to obtain lithium iron phosphate powder. This powder is roasted and mixed with an acid to leach it. Iron powder is added to the leached liquid to precipitate copper. Adjusting the pH allows the aluminium to precipitate. A further pH adjustment enables the precursor of lithium iron phosphate to be obtained. The electrode material is obtained again by drying, adding a carbon source and roasting the resulting product.

In essence, the prior art does not provide for a simple and effective method for recovering metals from lithium iron phosphate, mainly because of the quantities, which are small in themselves.

The problem underlying the invention is to propose a way to recover metallic materials present in used batteries which overcomes the drawbacks mentioned and which provides for effectively separating the metals from the lithium iron phosphate. This aim is achieved by a process for the recovery of metals from accumulators and batteries, comprising a leaching step, an iron recovery step, a lithium recovery step and an aluminium recovery step, wherein a leaching step with citric acid is provided, and the subsequent iron recovery is carried out by adding oxalic acid to the solution resulting from the leaching, there being at the end of the leaching step a suspension made up of a solution of lithium citrate and citric acid and a solid made up of a precipitate of iron oxalate, characterised in that the liquid exiting the iron recovery step is split into two flows, one directed towards the lithium recovery step, and the other recycled to the leaching step. The subclaims describe preferred fetures of the invention.

Based on a preferred embodiment, the leaching phase takes place with the addition of citric acid, separating iron and lithium from the crushed battery residues.

Based on a preferred embodiment, the leaching step takes place at a temperature between 20°C and 80°C. Preferably, leaching takes place at room temperature. Alternatively, the leaching temperature can range from 30°C to 80°C.

Based on a preferred embodiment, the concentration of citric acid in the leaching step ranges from 0.5 M to 3 M.

Based on a preferred embodiment, the process for the recovery of metals is carried out on lithium iron phosphate batteries (LFP cathodes).

Based on an alternative embodiment, the process for the recovery of metals is carried out on lithium manganese iron phosphate batteries (LMFP cathodes).

Based on a preferred embodiment, the lithium recovery step takes place by the addition of a solution containing carbonate ions.

Based on a preferred embodiment, the carbonate ions are added in the form of sodium carbonate.

Preferably, the carbonate ions are added to the solution for the recovery in the form of an aqueous solution. Alternatively, the carbonate ions are added to the solution in the form of solid material to be dissolved.

Based on a preferred embodiment, aluminium is recovered by calcination and subsequent sieving.

Based on an alternative embodiment, the lithium recovery step is preceded by a step for removing excess oxalate ions from the solution.

Based on a preferred embodiment, this removal of oxalate ions takes place by the addition of an ammonia solution to the solution.

Based on a preferred embodiment, the ammonium oxalate produced by the removal of oxalate ions is washed with methanol and then filtered. The residue of the washing is made to evaporate, to remove impurities that remain in the residue. The methanol which is evaporated, according to a preferred embodiment, is recycled to the washing phase.

Preferably, batteries to be subjected to the process according the present invention undergo pretreatments.

Based on one embodiment, during the pretreatment step, paper and/or plastic parts are removed from the batteries.

Based on one embodiment, during pretreatment the batteries are crushed.

Based on one embodiment, the batteries are crushed in a ball mill, with a circular saw or with a roller mill.

Preferably, the batteries are shredded to a size ranging between 0.5x0.5 cm to 5x5 cm.

Based on a preferred embodiment, the sieving in the aluminium recovery step separates out iron oxide powder and aluminium flakes, the latter being retained by the sieve.

Based on a preferred embodiment, the filtration steps required in various process steps are carried out at a reduced pressure. Preferably, said steps are conducted under vacuum.

Other features and advantages of the invention will become clearer from the following detailed description of a preferred embodiment, given purely by way of example and in a non-limiting manner, and illustrated in the appended drawings in which:
Figure 1 is a general block diagram of the process according to the present invention;
Figure 2 is a block diagram illustrating the leaching step for used batteries according to the process according to the present invention;
Figure 3 is a block diagram illustrating the iron recovery step according to the process according to the present invention;
Figure 4 is a block diagram illustrating the ammonium oxalate and lithium recovery steps, according to the process according to the present invention; and
Figure 5 is a block diagram illustrating the aluminium recovery phase, based on the process according to the present invention.

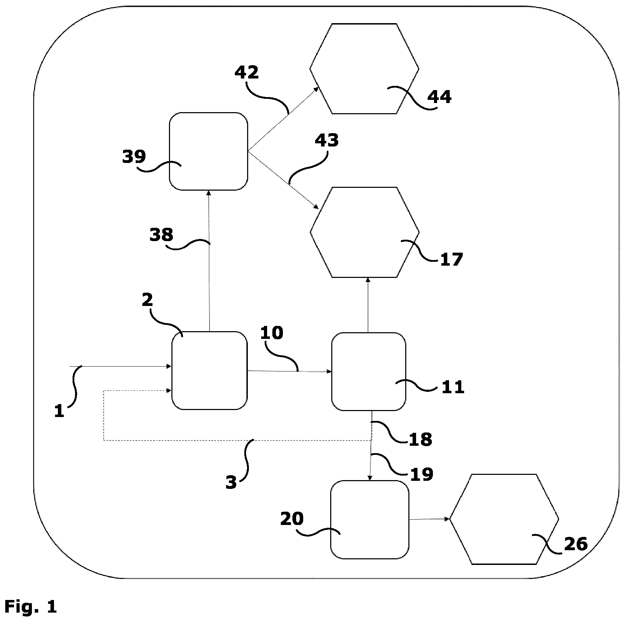

Going into the detail of the process according to the present invention, Figure 1 shows a general diagram thereof. The material to be treated is introduced into the process by the feed 1 and is sent to the first step 2 of leaching. At the step 2 a recirculation flow 3 also arrives.

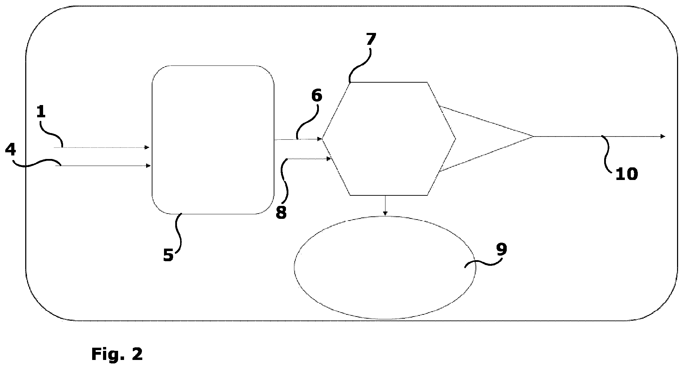

The step 2 is shown in more detail, although still in a schematic way, in Figure 2. In addition to the feed 1, there is a second feed 4. The two feeds 1 and 4 enter a leaching reactor 5. A flow 6 exits the reactor 5 and goes to a filtration step 7. A line 8 also enters the filtration step 7. The solid that remains in the filter is one of the products 9, while the filtered liquid leaves by a line 10 which, as shown in Figure 1, undergoes the step 11 of the process.

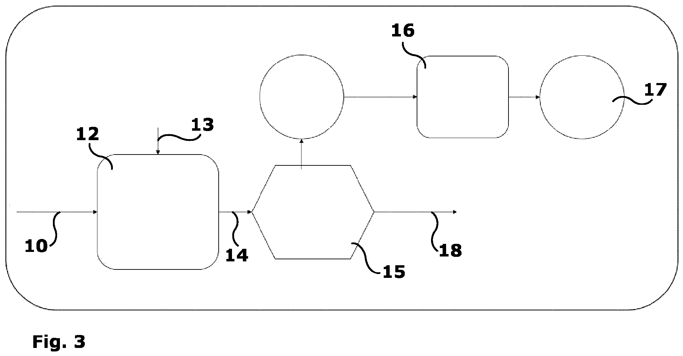

The step 11 is illustrated in Figure 3. The feed 10 supplies a reactor 12, supplied not only by the line 10 but also by a line 13. A line 14 exits the reactor 12 and feeds a filtration device 15.

The solid material obtained following the filtration in the device 15 is fed to an oven 16, from which the product 17 exits. For its part, on the other hand, the filtered liquid exits by the line 18, which is split into lines 3 and 19.

The line 19 is subjected to the step 20 of the process.

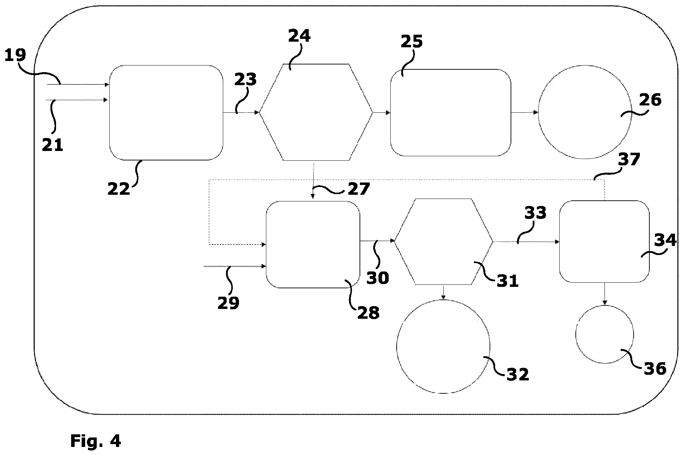

The step 20 is illustrated in Figure 4.

The line 19 and another line 21 feed a reactor 22, from which a line 23 exits. The line 23, in turn, feeds a filtration device 24. A filtered liquid is recovered from the filtration device 24 and sent to a reactor 25, from which a solid product 26 is recovered. The solid 26 recovered from the filtration device 24 exits by a line 27 which feeds a washing tank 28, which is fed also by a second line 29. The liquid obtained after washing exits into a line 30 and is fed into a filtration device 31, from which there exit a solid product 32 and a liquid transported in a line 33. The line 33 feeds an evaporator 34, from which impurities 36 and a liquid 37 are separated, which liquid 37 is recycled to the washing tank 28.

A second effluent, consisting of the residual material, exits from process step 2 and is sent via the line 38 to a process step 39.

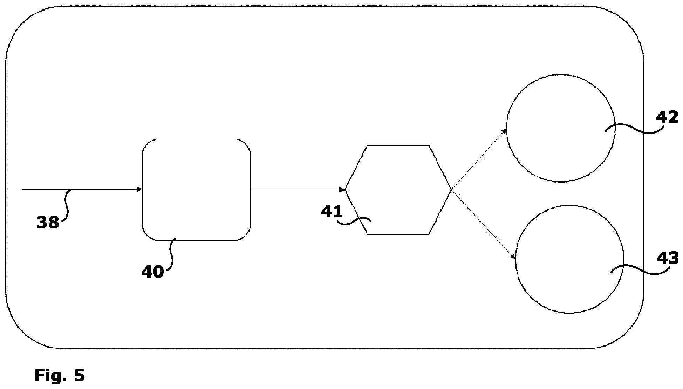

The process step 39 is described in detail in Figure 5.

The residual material from the step 2 is fed via the feed 38 to an oven 40. After the thermal treatment, the material leaving the oven is subjected to a sieving step 41, from which two different solids, 42 and 43, exit. The solid 43 joins the product 17 and the solid 42 forms the product 44.

In the following, the process according to the present invention is analysed in more depth.

The batteries and accumulators to be disposed of undergo a series of pretreatments, such as the removal of foreign substances (for example, plastic or paper labels, connecting wires, splices etc.), to prevent undesired reactions. Normally, they are crushed, preferably in a size ranging from 0.5x0.5 cm to 5x5 cm (so that they are small enough to give better results in the leaching and to avoid pieces that are too small from being drawn by the flows of solutions going to steps of the process where the residues must not go) and the product of this crushing is fed by the feed 1 to the reactor 5. The feed 4 supplies the reactor 5, in which leaching takes place, with a citric acid solution. Thus, in the reactor 5 the following reaction takes place:

3C₆H₈O₇ + 3LiFePO₄ ---> Li₃C₆H₅O₇ + Fe₃(C₆H₅O₇)₂ + 3H₃PO₄ (1)

through which iron and lithium are removed from the solid material of the batteries.

Generally, the quantity of liquid with respect to solid is between 5 l/kg and 30 l/kg, preferably between 10 l/kg and 25 l/kg, so that iron and lithium can be efficiently removed from the crushed parts. A particularly preferred value is 20 l/kg. The concentration of the citric acid solution ranges between 0.5 M and 3.0 M, preferably between 1 M and 2.5 M. A preferred value is 2.5 M. Preferably, the concentration of the citric acid solution is adjusted by adding citric acid in distilled water. The leaching time varies between a minimum of 15 minutes and a maximum of 3 hours, preferably between a minimum of 30 minutes and a maximum of 2 hours, a preferred value being 60 minutes, which forms a good compromise between a good removal and a reasonably short reaction time. Both batchwise or continuous operating is possible, in the latter case the leaching time corresponding to the residence time in the reactor. A stirred reactor is preferred, with a stirring speed of 150 rpm to 500 rpm, preferably 200 rpm to 450 rpm, with a preferred value of 300 rpm, so as to optimise the dissolution of lithium and iron. The temperature is not critical, but the reaction preferably takes place at a temperature between 20°C and 80°C, preferably between 60°C and 80°C. However, the most preferred is at room temperature, so as to discourage the aluminium from dissolving too.

The product leaving the reactor 5 is fed, through the flow 6, to the filtration step 7, where this product is washed with water from the line 8 to increase the recovery of metal and is preferably filtered under vacuum. In the washing phase, preferably 20% to 100% by weight of water is added, preferably about 30% by weight.

The solution, containing lithium and iron ions, and possibly aluminium ions, passes to the step 11 via the line 10, while the residual solid material is recovered as product 9 and is made to exit by the line 38.

The line 10 feeds the solution obtained from the leaching in the reactor 5 to a reactor 12, to which, according to the present invention, oxalic acid is fed from the line 13. The oxalic acid reacts with the iron citrate, according to the following reaction:

Fe₃(C₆H₅O₇)₂ + 3C₂H₂O₄ ---> 3FeC₂O₄ + 2C₆H₈O₇ (2)

thus separating the iron, which precipitates, from the lithium.

The quantity of oxalic acid to be used can be calculated on the basis of the molarity of the iron citrate in solution. Normally, a concentration from 0.4 to 1.5 times the iron concentration is required; preferably, equimolar quantities of iron and oxalic acid are used. The reaction preferably takes place at a temperature between 25°C and 95°C, depending on the type of battery at the outset. Since an increase in temperature does not improve the precipitation, it is advantageous to operate at room temperature. The reaction or residence time ranges between 15 minutes and 2 hours, preferably between 30 minutes and 1.5 hours, with a preferred value of 60 minutes.

At the end of the leaching step (2), a suspension is obtained consisting of a solution of lithium citrate and citric acid and a solid consisting of a precipitate of iron oxalate, taking into account that solubility at room temperature of the iron oxalate is less than 1 g/l while that of lithium citrate is about 66 g/l. The suspension is made to exit the reactor 12 and, via the line 14, passes to the filtration device 15.

The solution, mainly containing lithium citrate, which is recovered, exits through the line 18 which splits into the recirculation flow 3, which is recycled to the step 2 to increase the concentration of lithium in the solution, and a line 19, which leads to the next step 20 of lithium recovery. The solid is collected and sent to the oven 16, where it is calcined at 350°C for 60 minutes, to convert it into iron oxide, which forms the product 17.

As regards the step 20, the solution carried by the line 19 is fed to the reactor 22, which is also fed an ammonia solution by the line 21, so as to remove excess oxalate ions still contained in the solution. The reaction product exits by a line 23 and is fed to the filtration device 24. The solid exiting by the line 27 from the device 24 is washed with methanol, fed by the line 29, so as to remove any impurities. The methanol fed by the line 29 is added in a quantity ranging between 3 l/kg and 10 l/kg of solid, preferably between 4 l/kg and 10 l/kg, a preferred value being 5 l/kg. Ammonium oxalate is insoluble in methanol, therefore the material exiting the washing step 28 via the line 30 is subjected to a filtration step in the filtration device 31. The solid recovered as a solid product 32 is ammonium oxalate. The liquid which exits via the line 33 is fed to an evaporator 34 which removes the impurities 36 that remain after evaporation, while the recovered methanol is recycled to the line 29. The ammonium oxalate in 32 is dried at a temperature of 80°C for 12 hours, so as to have a saleable product.

The liquid filtered by the device 24 is sent into the reactor 25, where sodium carbonate is added to it, in order to obtain lithium carbonate (Li₂CO₃) which precipitates and is recovered as product in 26. Therefore, said lithium recovery step 20 occurs in the presence of carbonate ions. Preferably, said carbonate ions are added as sodium carbonate, given that it is a widely and cheaply available reagent. Based on the stoichiometry of the exchange reaction between sodium and lithium, the quantity of sodium carbonate to be fed into the reactor 25 is calculated. Preferably, 50% to 150% by weight with regard to the stoichiometric weight is added. Preferably, the addition is in stoichiometric quantity. It is mixed at a temperature between 50°C and 100°C, preferably between 60°C and 95°C, the preferred value being 90°C, so that complete ion exchange is achieved without the risk of boiling the solution.

The solid residue of the step 2 arrives, as already seen, via the line 38 to the oven 40 which starts the aluminium recovery step 39 of the process. Said aluminium recovery step 39 occurs through calcination and sieving. In the oven 40, the solid material is subjected to a treatment at a temperature ranging between 400°C and 800°C, preferably between 500°C and 650°C, the preferred value being 600°C, for 1 hour. Thus, the polyvinylidene fluoride is also removed from the solid. Given that a little iron oxalate, from the step 20 via the recirculation flow 3, is present in the solid material, iron oxide is formed during the treatment in the oven 40. The solid material is then passed to sieves 41, where iron oxide (43) in powder form and aluminium foils (42) are separated out. The iron oxide 43 is combined with the produced iron oxide 17, while the aluminium is recovered in 44.

The process according to the present invention provides for effectively separating the metals present in lithium batteries and accumulators, with high purity levels. Ammonium oxalate which is obtained as a by-product is a useful raw material for various industrial processes and therefore adds value to the process. The main products of the process are Li₂CO₃ with a certain quantity of phosphorus, and they can be reused to produce new LFP batteries, and a mixture of iron phosphate (and possibly manganese) to be reused for batteries or other applications.

It is understood that the invention must not be considered to be limited to the particular arrangement illustrated above, which forms only one examplary embodiment thereof, but that various variants are possible, all within the capabilities of a technician skilled in the art, without thereby departing from the scope of protection of said invention, which scope is defined in the claims that follow.

### EXAMPLE

100 g of lithium battery cathodes were collected and crushed into 2x2 cm pieces. Metals were contained in the cathode in the following percentages by weight: Iron 27.2%, lithium 3.7% and aluminium 13.6%.

10 g of this sample was placed in a 500 ml glass flask, into which 200 ml of 2.5 M citric acid was added. It was mixed for 60 minutes, stirring at 300 rpm. The mixture was filtered.

The solid residue was washed with 60 ml of distilled water, the filtered solution was combined with the wash residue, resulting in a solution containing 10.4 g/l of iron, 1.4 g/l of lithium and 16 ppm of aluminium.

To this liquid, 6.1 g of oxalic acid dihydrate was added. The whole was then subjected to vacuum filtration, separating the solid iron oxalate from the lithium-containing solution.

The solution was put back into the flask, in which again 10 g of crushed cathodes and 200 ml of 2.5 M citric acid solution were added.

These steps were repeated five times. The resulting solution contained 1.2 g/l iron, 6.8 g/l lithium and 32 ppm aluminium. The solid iron oxalate, collected from all the repeated steps, was gathered, dried in an oven and calcined in a muffle at 350°C for 60 minutes. The resulting powder contained 99.2% by weight of iron oxide, 0.5% by weight of lithium and less than 0.1% by weight of aluminium and phosphorus.

Ammonia was added to the solution until the pH of the solution was brought to 9.5, hence resulting in precipitation of ammonium oxalate. The solution was then filtered, removing this oxalate from it. The oxalate was washed with methanol, removing impurities from it.

The remaining solution was reacted with sodium carbonate at 85°C, resulting in a powder made up of 59.4% lithium carbonate and 2.7% iron.

The solid residue from the leaching steps was dried and calcined, obtaining aluminium at 98.7%, with 0.8% iron and 0.3% lithium.

### LIST OF REFERENCE CHARACTERS

- 1: Feed (for 2)
- 2: Leaching step
- 3: Recirculation flow
- 4: Feed (for 5)
- 5: Leaching reactor
- 6: Flow
- 7: Filtration step
- 8: Line
- 9: Product
- 10: Line
- 11: Iron removal step
- 12: Reactor
- 13: Line
- 14: Line
- 15: Filtration device
- 16: Oven
- 17: Product
- 18: Line
- 19: Line
- 20: Lithium recovery step
- 21: Line
- 22: Reactor
- 23: Line
- 24: Filtration device
- 25: Reactor
- 26: Solid product
- 27: Line
- 28: Washing tank
- 29: Line
- 30: Line
- 31: Filtration device
- 32: Solid product
- 33: Line
- 34: Evaporator
- 36: Discharge of impurities
- 37: Liquid
- 38: Line
- 39: Aluminium recovery step
- 40: Oven
- 41: Sieving
- 42: Solid
- 43: Solid
- 44: Product

## Claims

1. Process for the recovery of metals from accumulators and batteries, comprising a leaching step (2), an iron recovery step (11), a lithium recovery step (20) and an aluminium recovery step (39), wherein a leaching step (2) with citric acid is provided, and the subsequent iron recovery (11) is carried out by adding oxalic acid to the solution resulting from the leaching, there being at the end of the leaching step (2) a suspension made up of a solution of lithium citrate and citric acid and a solid made up of a precipitate of iron oxalate, **characterised in that** the liquid (18) exiting the iron recovery step(11) is split into two flows (3; 19), one (19) directed towards the lithium recovery step (20), and the other (3) recycled to the leaching step (2).

2. Process according to Claim 1, **characterised in that** it is carried out on lithium iron phosphate batteries (LFP cathodes).

3. Process according to Claim 1, **characterised in that** it is carried out on lithium manganese iron phosphate batteries (LMFP cathodes).

4. Process according to any one of Claims 1 to 3, **characterised in that** said lithium recovery step (20) occurs in the presence of carbonate ions.

5. Process according to Claim 4, wherein said carbonate ions are added as sodium carbonate.

6. Process according to either Claim 4 or Claim 5, **characterised in that** the lithium recovery step (20) is preceded by an addition of ammonia and a washing with methanol and a filtration step.

7. Process according to any one of the preceding claims, **characterised in that** said aluminium recovery step (39) occurs through calcination and sieving.

8. Process according to any one of the preceding claims, **characterised in that** the concentration of citric acid in the leaching step ranges from 0.5 M to 3 M.
